(19)

Europäisches
Patentamt
European
Patent Office
Office européen
des brevets

(11) **EP 2 065 697 B1**

(12) **EUROPEAN PATENT SPECIFICATION**

(45) Date of publication and mention
of the grant of the patent:
**22.02.2012   Bulletin 2012/08**

(51) Int Cl.:
***G01N 21/35*** (2006.01)

(21) Application number: **08167482.2**

(22) Date of filing: **24.10.2008**

(54) **Gas measurement system**

Gasmesssystem

Système de mesure de gaz

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority:   **09.11.2007   SE 0702471**

(43) Date of publication of application:
**03.06.2009   Bulletin 2009/23**

(73) Proprietor: **Phasein AB**
**18233 Danderyd (SE)**

(72) Inventors:
• **Eckerbom, Anders**
**SE-185 41, Vaxholm (SE)**

• **Svensson, Thomas**
**SE-112 30, Stockholm (SE)**
• **Zyzanski, Robert**
**SE-114 30, Stockholm (SE)**

(74) Representative: **Loqvist, Gabriel Mathias**
**Awapatent AB**
**P.O. Box 45086**
**104 30 Stockholm (SE)**

(56) References cited:
**WO-A-03/060490      US-A- 4 692 621**
**US-A- 4 914 719      US-A1- 2006 278 829**

**Description**

**TECHNICAL FIELD**

The present invention generally relates to the field of gas analysis and in particular to a gas analyzing system and a method for the analysis of respiratory gases supplied to and received from a mammal, for example, a patient undergoing general anaesthesia.

**BACKGROUND OF THE INVENTION**

Gas analysis and the measurement of a gas concentration with infrared technology is generally implemented by means of a non-dispersive method, i.e. by measuring absorption through an appropriately selected optical bandpass filter. The measured attenuated radiation transmitted through the gas layer will be an integrated value of transmissions existing over various wavelengths of this band.

With regard to gas analysis carried out in connection with respiratory care, a distinction is made between two principle types of gas analysers, i.e. between side stream analysers and main stream analysers. Side stream analysers take a minor sample flow from the respiratory circuit of a patient to an adjacent instrument in which the actual gas analysis take place, whereas main stream analysers calculate the gas concentration directly in the respiratory circuit of the patient. Main stream analyser is normally placed as close as possible to the patient's mouth or trachea, for reasons of accuracy.

Main stream analysers can be made less expensive, more energy-lean and more responsive than side stream analysers, since the need for sample flow handling (pumps, hoses, etc.) is obviated. Consequently, main stream gas analysers are preferred over side stream analysers.

Generally, in gas analysis, the light from an IR-emitter passes through the gas mixture of a measuring chamber and is filtered by a narrow-band optical bandpass filter. The gases absorb infrared light at gas specific wavelengths and during the passage through the gas mixture, the gases in the mixture hence absorb some of the light. The partly absorbed light is detected by an IR-detector and the intensity of the detected light is determined. By measuring the intensity, i.e. the intensity corresponding to the light that not was absorbed by the gas or the gases, a measure of the concentration of a gas or gases in the gas mixture can be obtained.

Various requirements for gas analysers exist in health care. During emergency care, it is, for example, sufficient to monitor breathing of a patient with a carbon dioxide analysis in case of emergency care, whereas it is often desired to measure and monitor a greater number of patient gases, such as carbon dioxide, oxygen gas, nitrous oxide and one or more of the anesthetic agents Halothan, Enfluran, Isofluran, Sevofluran and Desfluran in the case of patients undergoing general anaesthesia.

In order to analyze unknown mixtures of patient gases such as carbon dioxide, oxygen gas, nitrous oxide and one or more of the anesthetic agents Halothan, Enfluran, Isofluran, Sevofluran and Desfluran and to identify which gases and/or agents that are present in the mixture, several optical filter are required. In US 4,914,719, for example, a gas analyzer for determining the identity of a specific gas of a number of gases having overlapping absorption spectra and the concentration thereof is disclosed. In one embodiment, a DC infrared source generates an optical beam that passes through a chamber containing a gas sample and the strikes a filter wheel having three filters for three different gases and one reference filter. The filter wheel is rotated by a stepped motor. Light passing through the filter wheel strikes an infrared detector which generates measuring signals. In the analyzer according to US 4,914,719, it may necessary to maintain the respective spacing between the filter openings of the filter wheel sufficiently large in order to be able to determine a null intensity or reference intensity. If the respective spacing is made smaller, for example, in order to obtain a smaller filter wheel or to enable the analysis of more than three gases, it might arise cross-talk between the filter openings, i.e. that the detector signal does not decrease to its reference level during the periods between two consecutive filters of the filter wheel when the incident light impinges on the filter wheel part between the consecutive filters. This may, for example, lead to an impaired signal to noise ratio, which, in turn, deteriorates the accuracy and reliability of the measurements. Thereby, it may be difficult to construct the gas analyzer as small as the requirements of, in particular, main stream multigas applications of today with regard to, for example, size and weight. Furthermore, it may be difficult to design the gas analyzer for multigas analysis, e.g. five or six gases, since it requires that the filter wheel is provided with a large number of filters in turn entailing that the respective spacing between consecutive filters must made small, which leads to cross-talk between the filters. In US 4 692 621, another gas analyzer for determining the identity of a specific gas of a number of gases having overlapping absorption spectra and the concentration thereof including a rotatable filter wheel is disclosed. The gas analyzer of US 4 692 621 is thus impaired with similar problems as the analyzer described in US 4,914,719.

Accordingly, there is a need within the art of an improved gas analyser for multigas analysis. Further, there is a need for a gas analyzer having a high degree of accuracy and reliability in, for example, respiratory and anaesthesia care.

**BRIEF DESCRIPTION OF THE INVENTION**

Thus, an object of the present invention is to provide a small, compact and light gas analyser for multigas analysis.

A further object of the present invention is to provide a gas analyzer having a high degree of accuracy and reliability at multigas analysis in respiratory care.

Yet another object of the present invention is to provide a gas analyzer that easily can be adapted for use both in main stream and side stream configurations.

These and other objects of the present invention are achieved by means of a gas analyzer, and a method for analyzing gases, and method having the features defined in the independent claims. Preferable embodiments are characterized by the dependent claims.

According to an aspect of the present invention, there is provided a gas analyzing system for the analysis of respiratory gases to and from a mammal. The gas analyzing system comprising a light transmitter which includes an IR-emitter adapted to emit at least one measuring beam, which light transmitter being arranged to emit the measuring beam into a gas mixture including the respiratory gases, a filter component including a number of filters having different transmission wavelength ranges, the filter component being arranged to position the filters such that the at least one measuring beam passes through the number of filters one at a time, a light receiver including an IR-detector adapted to receive the measurement beam and to generate at least one measurement signal reflecting an optical energy of the measurement beam, and a signal processing circuitry adapted to receive the at least one measurement signal. The signal processing circuitry comprises a peak detector adapted to identify peaks in the at least one measurement signal, each peak corresponding to a filter of the filter component, and an intensity measure estimating unit adapted to determine an intensity measure of each identified peak using at least one predetermined estimation function.

According to a second aspect of the present invention, there is provided a method for analyzing respiratory gases supplied to and received from a mammal. The method comprises the steps of emitting at least one measuring beam into a gas mixture including the respiratory gases, positioning a filter component including a number of filters having different transmission wavelength ranges such that the at least one measuring beam passes through the number of filters one at a time, receiving the measurement beam and generating at least one measurement signal reflecting an optical energy of the measurement beam, identifying peaks in the at least one measurement signal, each peak corresponding to a filter of the filter component, determine an intensity measure of each identified peak using at least one predetermined estimation function describing at least a part of the measurement signal.

Due to the small dimensions of the multigas analyser, particularly of the filter component (e.g. the filter wheel), required for main stream use and the filtering in the detector and hardware, the detector signal will not decrease to its reference level during the "dark" periods, i.e. during periods between two consecutive filters of the filter wheel when the incident light impinges on the filter wheel part between the consecutive filters. Consequently, there is a problem in determining the intensity of the peaks of the signal, i.e. when a filter passes through the beam of emitted light. Traditionally, the filter component is designed to obtain such "dark periods", i.e. the filter component is designed with small filter apertures and respective spacing between consecutive filters being large enough to allow the detector to detect the reference level or null level of the intensity between two consecutive filters. However, in small multigas analyzers adapted for e.g. main stream use, the physical restrictions put on the filter component, for example, with regard to size, number of filters, weight, etc. do not allow such traditional design. The invention is therefore based on idea of instead using the measured signal during the light periods, i.e. during the periods when the emitted light impinges on the optical filters and to estimate an intensity of the peaks in the signal, i.e. the parts of the signal corresponding to a filter.

The present invention provides a number of advantages. For example, due to the fact that the light periods, i.e. the peaks of the measurement signal, are utilized for determining the reference intensity, the filter wheel can be made small and compact at the same time as it can include several filters allowing for multigas analysis. That is, it is not necessary to measure the actual reference or null intensity for each peak as in the prior art.

A further advantage is that the distance or respective spacing between consecutive filter apertures or openings can be made smaller and hence the apertures can be made larger and, therefore, the signal to noise ratio can be improved, which, in turn, provides for an improved accuracy and reliability of the measurements.

In one embodiment of the present invention, the peak detector further comprises a time alignment circuit adapted to perform a time alignment between identified peaks and the at least one predetermined estimation function. Thereby, the sensitivity to variation in the rotational speed of the motor can be reduced due to the fact that the optical signal is used and that time-alignment is performed.

In embodiments of the present invention, the predetermined estimation function is a function describing at least a part of the measurement signal.

In one embodiment of the present invention, the peak detector is adapted to determine peak characterizing measures of the measurement signal and to use the peak characterizing measure to identify the peaks. The peak characterizing measure may, for example, be the maximum derivative, the maximum amplitude, or a zero crossing in a difference signal of a delayed signal and the measurement signal.

According to an embodiment of the present invention, the peak detector comprises a delay buffer adapted to receive the measurement signal and to delay the signal a predetermined period, a combiner adapted to combine the delayed signal with the measurement signal to create a difference signal, and a zero crossing identifier adapted to identify zero crossing in the difference signal and to deliver a peak detection indication based on the identified zero crossing.

In one embodiment, the predetermined delay period corresponds to about the width of the identified peak.

In another embodiment of the present invention, the peak detector further comprises a qualify and small peak detection logic adapted to qualify peaks using a threshold, which may have a predetermined threshold or which may be adaptive. Peaks having a magnitude being above the threshold are qualified as being a peak. Further, the qualify and small peak detection logic is adapted to detect small peaks using a predetermined inter-peak distance.

In a further embodiment of the present invention, the gas analyzing system comprises an intensity measure estimating unit including a delay buffer adapted to receive the measurement signal, to delay the signal a period, which delay may be predetermined or which may be adaptive, to receive the peak detection indication from the peak detector, and to create a time aligned peak using the delayed measurement signal and the peak detection indication, a model function circuit adapted to receive the peak detection indication from the peak detector and to select the at least one predetermined estimation function, which may be a function describing at least a part of the measurement signal on basis of the peak detection indication; and an intensity estimator adapted to receive the predetermined estimation function and the time aligned peak and to estimate an intensity of each peak using the predetermined estimation function and the time aligned peak.

According to another embodiment of the present invention, the gas analyzing system comprises an intensity measure estimating unit comprising an inverse filter adapted to inverse filtering the measurement signal, and an intensity estimator adapted to: estimate a base line using interpolation between reference levels in the filtered signal; subtract the estimated base line from the filtered signal to create a base line corrected signal; and calculate the intensity for each peak using values of the base line corrected signal.

In another embodiment, the gas analyzing system comprises an intensity measure estimating unit including intensity estimator adapted to: calculate the intensity for each peak using values of the measurement signal; de-convolute the signal containing the calculated intensities; estimate a base line using interpolation between reference levels in the de-convoluted signal; and subtract the estimation of the baseline from the de-convoluted signal.

According to another embodiment of the present invention, the intensity estimator is adapted to estimate the intensity for each peak by solving

$$\min_{k,b} \left\| peak[\ ] - k \cdot wav[\ ] - b \right\|^2 ,$$

wherein peak [] represents the time aligned peak, k represents the estimated intensity, wav[] represents the predetermined estimation function, and b is an offset.

According to embodiments of the present invention, the gas analyzing further comprises an analyzer adapted to analyze the intensity measures to identify at least one gas and/or determine a concentration of at least one gas of the gas mixture.

According to an embodiment of the present invention, the analyzer is adapted to use a equation system describing the relation between the partial pressure of gases in the measurement chamber and measured absorbance's, and use weight factors for respective equations in the system being a function of measured absorbance's. This provides a number of advantages. It is, for example, possible to continuously "disconnect" a filter when the absorbance is too high by adjusting the weight factor, i.e. by decreasing it towards zero. Moreover, the measurement error and measurement noise can be reduced. It is also possible to improve the reliability of the identification of gases present in the gas mixture.

In yet another embodiment of the present invention, the at least one predetermined estimation function is at least one base function that is a model of the measurement signal, the base function being determined during a calibration process.

As the skilled person realizes, steps of the method according to the present invention, as well as preferred embodiments thereof, are suitable to realize as computer program or as a computer readable medium.

The feature that characterize the invention, both as to organization and to method of operation, together with further objects and advantages thereof, will be better understood from the following description used in conjunction with the accompanying drawings. It is to be expressly understood that the drawings are for the purpose of illustration and description is not intended as a definition of the limits of the invention. These and other objects attained, and advantages offered, by the present invention will become more fully apparent as the description that now follows is read in connection with the accompanying drawings.

**BRIEF DESCRIPTION OF THE DRAWINGS**

Further features of the invention, its nature and various advantages will more apparent from the accompanying drawings and the following detailed description of the invention, in which reference will be made to the accompanying drawings, of which:

Fig. 1 schematically illustrates one embodiment of the gas analyzing system according to the present invention;
Fig. 2 schematically illustrates one embodiment of the gas analyzing system according to the present invention used in a side stream application;
Fig. 3 illustrates the general principles of method according the present invention for determining a measure of the reference intensity;
Fig. 4 illustrates the received IR signal during one lap of the filter wheel and a corresponding difference signal computed from the IR signal and a delayed signal;
Fig. 5 schematically illustrates one embodiment of the peak detector according to the present invention; and
Fig. 6 schematically illustrates one embodiment of the intensity measure estimating unit according to the present invention.

**DETAILED DESCRIPTION OF THE INVENTION**

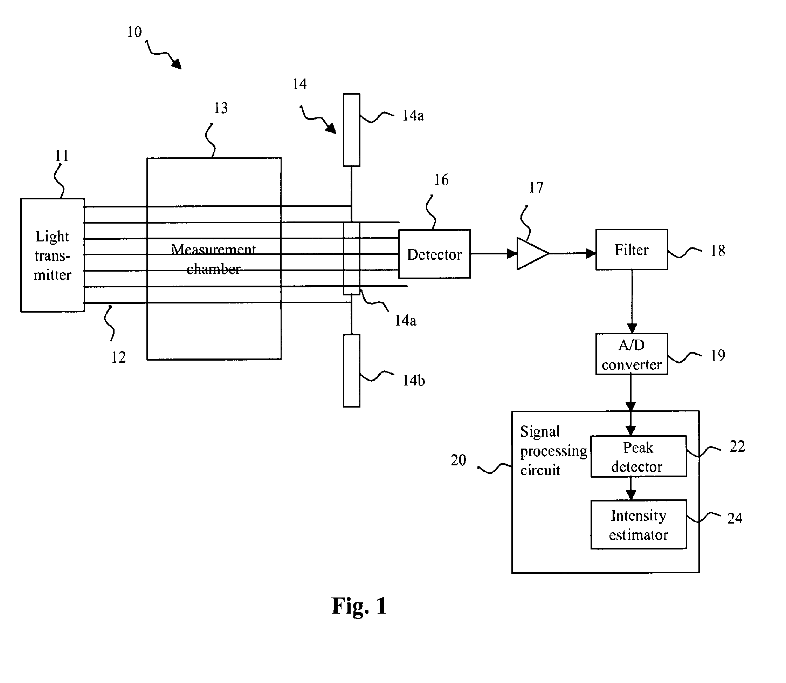

With reference to Fig. 1, one embodiment of the gas analyzing system according to the present invention will be discussed. The gas analyzing system 10 includes a light transmitter 11 including infrared optical light source or IR emitter emitting broadband IR-light 12, which is actuated and controlled via a control unit (not shown). The light output 12 from the light transmitter 11 passes through a measurement chamber 13 via windows (not shown) arranged in the chamber 13, which contains the gas or gas mixture to be analyzed and/or identified.

Further, the partial pressure or concentration of the gas or the gas mixture may be determined. The absorbance of the measurement chamber 13 depends of the gas or gas mixture present within the chamber 13 and the concentration or concentrations thereof. For a given gas mixture, the absorbance is wavelength dependent.

A filter unit or component 14 including a number of filters is arranged to receive the light that has passed through the measurement chamber 13. The filter component 14 includes different optical band-pass filters 14a adapted to the substances or gases to be analyzed and may also comprise one or more band-pass reference filters 14b. Each specific filter is designed to filter out light having a wavelength outside a narrow wavelength range. In one embodiment of the present invention, the filter component 14 is a rotatable filter wheel controlled by a motor adapted to rotate the filter wheel via a rotatable output shaft at a desired rotational speed. Due to the rotation of the wheel the measurements for the different wavelength ranges defined by the different filters are repeated at regular intervals.

In one particular embodiment of the filter wheel, the wheel includes nine filters, namely: a first filter adapted for carbon dioxide, a second filter adapted for laughing gas ($N_2O$), a third reference filter, a fourth filter adapted mainly for Halothan, a fifth filter adapted mainly for Enfluran, a sixth filter adapted mainly for Isofluran, a seventh filter adapted mainly for Sevofluran, an eight filter adapted mainly for Desfluran, and a ninth reference filter. The anesthetic agents have partly overlapping absorption spectrums and therefore the amount of light that passes through an individual filter will correspond to more than one of the anesthetic agents.

The band-pass filtered light is received by an IR-receiver including a detector 16. According to one embodiment, the detector 16 is a pyroelectric crystal. The pyroelectric crystal is heated by the incident IR-light on one side and is cooled on the other. The resulting temperature difference causes a charge displacement in the crystal, which can be identified as a current. This current or detector signal is conducted via a preamplifier 17, a filter 18, and an A/D converter 19 to a signal processing circuit 20. The signal processing circuit 20 is adapted to process the received detector signal to determine a measure being proportional to the incident intensity for each filter 14a, 14b.

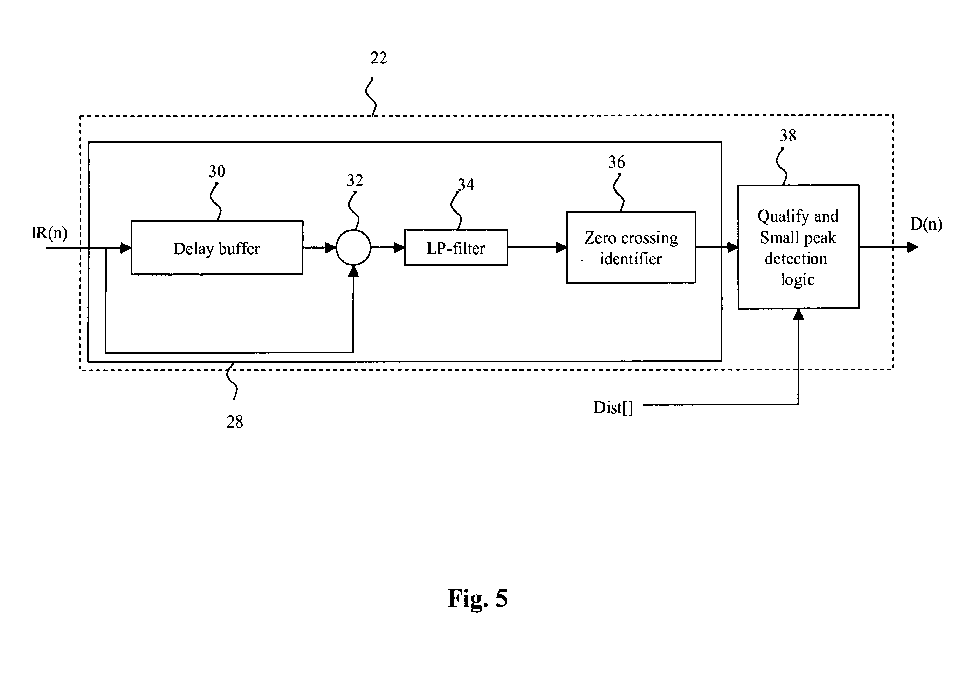

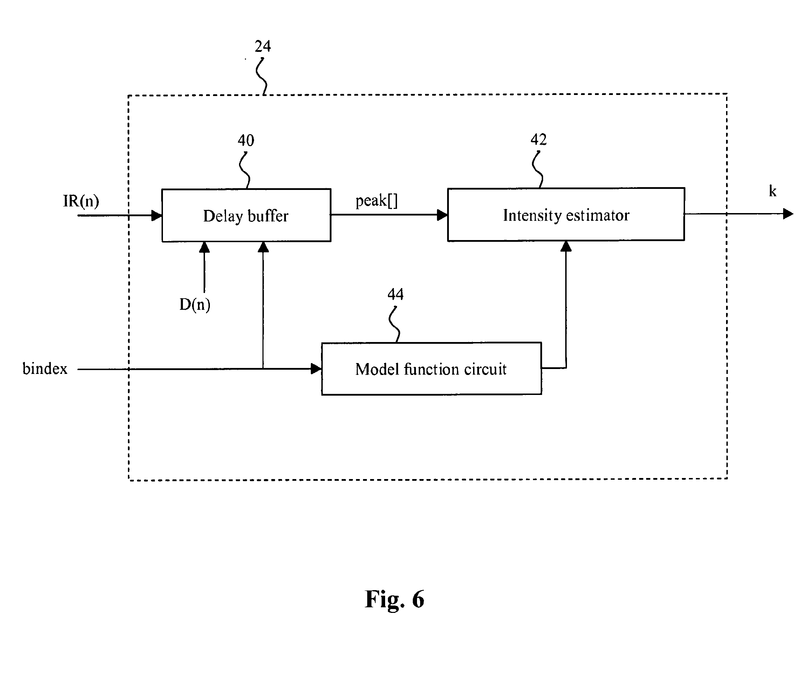

The signal processing circuit 20 comprises a peak detector 22 adapted to identify peaks in the measurement signal, wherein each peak corresponds to a filter 14a, 14b of the filter component 14, respectively, and an intensity measure estimating unit 24 adapted to determine an intensity measure of each identified peak using at least one predetermined estimation function, which may be a function describing at least a part of the measurement signal. The peak detector 22 and the intensity measure estimating unit 24 will be described in more detail below with reference to Figs. 5 and 6, respectively.

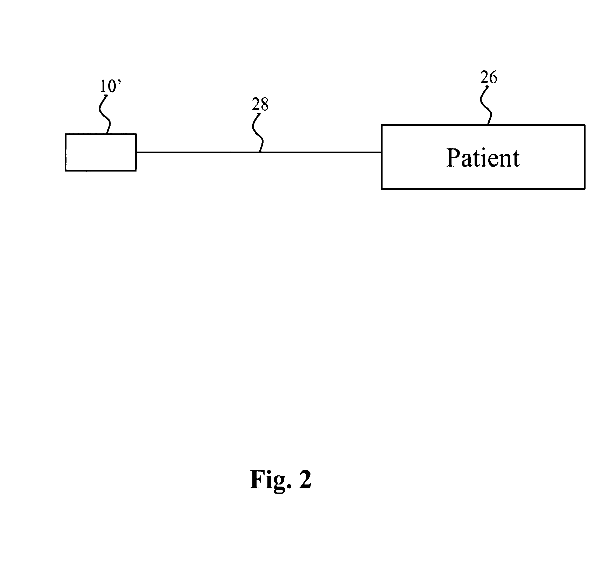

The measurement chamber 13 may be adapted to be connected to a respirator or the like in a main stream application, and may have connectors for the connection to a hose leading to the patient. In Fig. 2, the gas analyzer 10' is shown in a side stream application. The gas analyzer 10' may be used to analyzer gas components and/or determine the identities of the gases in a sample drawn from the air stream of a patient 26. The sample may be drawn from the patient's endothracheal tube if the patient is intubated, but may also be drawn a cannula or mask proximate a patient's trachea, such as via a nasal cannula accessory. The gas sample is conveyed to the side stream gas analyzer 10' by a sample tube 28, which may be a few meters in length. The gas analyzer 10' may be connected to the patient 26 via a pump (not shown) and a filter/recycler (not shown). The side stream gas analyzer 10' analyzes the gas or the gas mixture and/or identifies the gas or gases may be determined as will be described hereinafter.

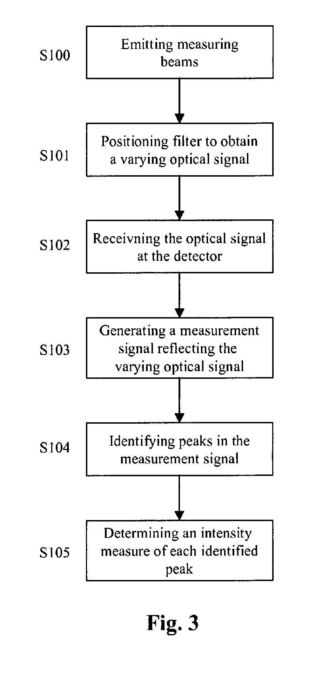

With respect to Fig. 3, the general principles of method according the present invention for determining a measure of the reference intensity will be described. First, at step S100, at least one measuring beam is emitted into the gas mixture to be analysed, which gas mixture may contain respiratory gases. A filter component 14 including a number of filters having different transmission wavelength ranges is, at step S101, positioned such that the at least one measuring beam passes through the number of filters one at a time. Thereby, the light is concentrated to narrow wavelength ranges defined by the respective filters. In one embodiment of the present invention, the filter component 14 is a rotatable filter wheel controlled by a motor adapted to rotate the filter wheel via a rotatable output shaft at a desired rotational speed. Due to the rotation of the wheel the measurements for the different wavelength ranges defined by the different filters are repeated at regular intervals. At step S102, the measurement beam is received at the detector 16. Thereafter, at step S103, at least one measurement signal reflecting an optical energy of the measurement beam is generated. Then, the measurement signal is conducted to the signal processing circuit 20, wherein the received detector signal is processed to determine a measure being proportional to the incident intensity for each filter 14a, 14b. At step S104, peaks in the at least one measurement signal is identified, wherein each peak corresponds to a filter of the filter component. Thereafter, at step S105, an intensity measure of each identified peak using at least one predetermined estimation function, which may be a function describing at least a part of the measurement signal. In one embodiment, the at least one predetermined estimation function is at least one base function that is a model of the measurement signal, wherein the at least one base function may have been determined during a calibration process.

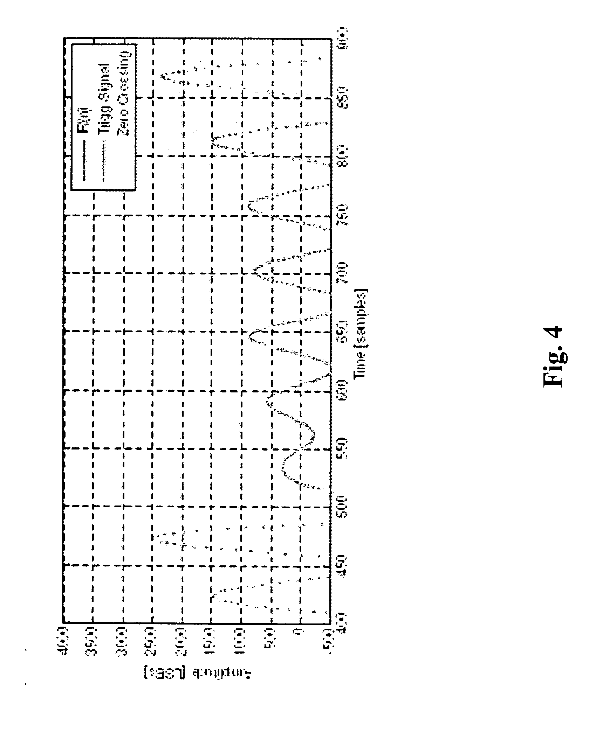

Turning now to Figs. 4 and 5, the peak identifying step according to one embodiment of the present invention will be discussed in more detail. The peak identifying algorithm includes a precise timing of the peaks for time-alignment of the at least one estimation function and the peak in the actual measured signal. The IR signal is noisy and peaks may be too small to be reliable detected. In order to obtain a precise timing in the presence of noise, zero crossings are searched in a "trig" signal. This is computed from a filtered signal of the difference of the current sample and a sample delayed about the width of the peak. To reject false detections a threshold is applied to qualify peaks. A small peak will not be detected and will be aligned by its nominal position relative previous peak if no peak is found in the qualify window. This principle is shown in Fig. 4. The peaks are detected by finding or identifying zero crossings in the trigger signal. In this illustrated example is the lap time 50 ms and the signal is sampled at 10 kHz.

With reference now to Fig. 5, an embodiment of the peak detector 22 according to the present invention will be discussed. The IR signal IR(n) is received from the A/D converter 19. The received signal IR(n) is fed to a time alignment circuit 28 adapted to perform a time alignment between the identified peaks and the at least one predetermined estimation function. In one embodiment, the time alignment circuit 28 comprises a delay buffer 30, where each sample is delayed with about the width of a peak. This approximate peak width can be determined by means of a calibration process. The delayed signal is combined at a combiner 32 with the undelayed signal. Thereby, a signal containing the difference of a current sample and a sample delayed about the width of the peak is obtained. The combined signal or trig signal is filtered in a low-pass filter 34 and the filtered signal is supplied to a zero crossing identifier 36 adapted to identify the zero crossings in the trig signal (see Fig. 4). In an alternative embodiment, the peak detector is adapted to identify the maximum derivative of the measurement signal.

In this embodiment, a qualify and small peak detection logic 38 is adapted to qualify peaks and to detect small peaks. The peak qualification uses a predetermined threshold, which may depend on an actual signal-to-noise ratio and need to be sufficiently high to avoid false detection but sufficiently low to detect at least some of the peaks. Each detected peak D(n) is outputted from the qualify and small peak detection logic 38. In one embodiment, the small peak detection is performed by using a nominal inter-peak distance Dist[], i.e. if a zero crossing is not detected the next peak is approximated to occur at a nominal distance from the last peak.

In the intensity measure determination according to an embodiment of the present invention, each peak in the IR signal is seen as a scaled and translated nominal peak and the scale factor can be used as a measure of the intensity of the peak. The nominal peak is calculated and stored by time-alignment and waveform averaging during the calibration process. This average waveform is called a base function and its length must be selected such that channel crosstalk is avoided. The scale factor and offset are determined by minimizing the least square error between the actual peak, i.e. the measured peak, and the modelled peak, i.e. in this embodiment the at least one base function.

With reference now to Fig. 6, an embodiment of the intensity measure estimating unit 24 according to the present invention will be discussed. The IR signal IR(n) is received from the A/D converter 19. The received signal IR(n) is fed to a delay buffer 40, where each sample is delayed about the width of a peak. This approximate peak width can be determined by means of a calibration process. Furthermore, the detected peak D(n) is fed from the qualify and small peak detection logic 38 and an index identifying the current base function is fed to the delay buffer 40. The index identifying the current base function is also supplied to a model function circuit 44. In one embodiment, the model function circuit 44 comprises the above mentioned base functions and the appropriate base function, baseF[index].wav[], can be selected on basis of the index.

The time aligned peak, peak [], is outputted from the delay buffer 40 and fed to an intensity estimator 42. The estimated intensity, k, is determined by solving the normal equations from the over-determined equation system that can be derived from:

$$\min_{k,b} \left\| peak[\ ] - k \cdot wav[\ ] - b\ \right\|^2$$

The estimated intensity, k, is outputted from the intensity estimator 42. The estimated intensities, k, can be used to determined the concentration or partial pressure of the gas or gases in the measurement chamber 13.

An alternative approach to the use of base functions, is to inverse filtering the measurement signal (received from the A/D converter). The filtering of the hardware is $H(z)$. Each stable filter has an inverse $H^{-1}(z)$, and, thus, $H(z) \cdot H^{-1}(z)$ will constitute an identity mapping. Thereby, it is possible to re-create the input signal. Hence, the measurement signal is converted in the A/D converter and is applied to the inverse filter. Thereafter, an estimation of the base line is created using linear interpolation between two consecutive reference levels in the inverse filtered signal, the estimation of the base line is subtracted from the inverse filtered signal, and each intensity is calculated as a weighted sum of values of the base line corrected signal where the sum interval is controlled by the peak detector.

According to another embodiment, if the IR signal is seen as a number of superposed pulse responses, the cross-talk between can be modelled. The measured intensity can be seen as a sum of pulse responses having different delays and amplitudes. The measurement signal is converted in the A/D converter and intensity is calculated as a weighted sum of values from the A/D signal where the sum interval is controlled by the peak detector. The signal comprising the calculated intensities is de-convoluted. Then, an estimation of the base line using a linear interpolation between two consecutive reference levels in the de-convoluted signal is made and the estimation of the baseline is subtracted from the de-convoluted signal.

The optical filters 14a, 14b have to be synchronized with the peaks of the IR signal. This can be performed, for example, by arranging an "index opening" in the filter component 14, which provides the largest peak in the signal. This largest peak may, in turn, be used to for the synchronization.

According to another embodiment of the present invention, a filter wheel mask in sheet metal is applied on the wheel, which easily can be designed to obtain different peak patterns. For example, by designing the wheel with different spacing between the filter openings. Thereby, the peaks will occur at different distances from each other in the measurement signal and the synchronization can be made using the distance pattern. In one embodiment, the filter wheel is designed such that the shortest distance occurs between two of the peaks. An alternative approach is to use a sequence of different distances.

According to a further embodiment, a magnetic field sensor, e.g. a hall-effect sensor, is used for the synchronization. The motor comprises a rotor including a number of permanent magnets and a hall-effect sensor is adapted to transfer information to the control circuit when the rotor rotates. This is, for example, used to regulate the motor to ensure that a constant speed can be withheld. Irregularities in the magnetization of the rotor will entail different intervals between the transition time points at constant speed, i.e. there exists a pattern, $\overline{d}_h$, that can be measured and related to the specific positions of the individual optical filters of the filter wheel at a calibration. The vector, $\overline{d}_h$, has the same length as the number of filters, N. If $\beta$ constitutes a registration of the N latest distances and when the expression

$$\left\| \overline{\beta} - \overline{d_h}\ \right\|$$

is minimized or small, a synchronization has been obtained.

In yet another embodiment of the present invention, the filter openings can be designed such that they have different sizes. In this case, a synchronization can be achieved by calculating a least square error between respective peak and the modelled peak, i.e. in this embodiment the at least one base function, corresponding to the respective filter.

Hereinafter, the anesthetic agent identification and concentration analyse will be described.

The partial pressure of five anesthetic agents in the measurement chamber 13 can be defined as:

$$\overline{p} = (pp_{HAL}, pp_{ENF}, pp_{ISO}, pp_{SEV}, pp_{DES})^T$$

If the filter component 14 comprises five optical filters 14a, the measured absorbance can be defined as:

$$\overline{a} = (a_1, a_2, a_3, a_4, a_5)^T,$$

where the absorbance can be calculated according to:

$$-\log(T),$$

where T is the transmittance, which, in turn, is a function of the intensity and can be determined by:

$$T = I/I0$$

A multi-dimensional non-linear equation system can be used to describe the relation between the partial pressure of the anesthetic agents in the measurement chamber 13 and measured absorbance's. The system can be expressed as:

$$A(\overline{p}) = \overline{a} \qquad \text{(eqt. 1)}$$

The calculation is based on the assumption that the absorbance's can be added, i.e. if two or more gases absorb light for a given filter the absorbance's for the respective gases can be added up to obtain to total absorbance. This assumption is an approximation that is adequate for certain gas combinations, concentrations and filters but not for all. When for example the absorption of the gases is large and the transmittance is close to zero, a large error propagation from transmittance via absorbance to the partial pressure may occur. This error can be described as:

$$e_a \approx \frac{\partial a}{\partial T} \cdot e_T = -\frac{\partial}{\partial T}(\log(T)) \cdot e_T = \frac{1}{T} \cdot e_T \qquad \text{(eqt. 2)}$$

If it is assumed that there is only two gases present within the measurement chamber 13, the equation system $A(\overline{p}) = \overline{a}$ in eqt. 1 will be an over-determined non-linear equation system. Given an initial value, $\overline{p}_0$, it is possibel to obtain more accurate solutions by means of iteration. Such solutions is characterized by that the error

$$\left\| A(\overline{p}_n) - \overline{a} \right\|^2 = \overline{e}_n^T \cdot \overline{e}_n$$

is reduced.

Filters having a high degree of absorbance contribute to an unnecessary large measurement error, which manifests as a measurement error and measurement noise, for example, at high partial pressures of Desfluran (DES). This error can be reduced significantly by weighting the equations containing a large error (see eqt. 2) with a factor $\lambda$ $(a_i)$ being a function of measured absorbance. Hence, instead of reducing

$$\overline{e}_n^T \cdot \overline{e}_n$$

the following is reduced

$$\overline{e}_n^T \cdot diag(\overline{\lambda}^2) \cdot \overline{e}_n$$

where $diag(\overline{\lambda}^2)$ is a diagonal matrix with the squared weight factors in its main diagonal. Furthermore, it might also be taken into consideration that some of the filters are known to be inappropriate for certain filter/gas combinations. For these combinations $\lambda$ can be set to zero independently of the absorbance, i.e. the equation is not used.

This method provides a number of advantages. It is for example possible to continuously "disconnect" a filter when the absorbance is too high. Moreover, the measurement error and measurement noise can be reduced as well as the reliability of the identification of gases present in the gas mixture.

In order to identify which two anesthetic agents that is present in a gas mixture, the following expression is calculated for all 10 possible combinations of the five agents:

$$\overline{e}_n^T \cdot diag(\overline{\lambda}^2) \cdot \overline{e}_n$$

The gas combination providing the lowest error will be selected and thus identified.

Although exemplary embodiments of the present invention have been shown and described, it will be apparent to those having ordinary skill in the art that a number of changes, modifications, or alterations to the inventions as described herein may be made. Thus, it is to be understood that the above description of the invention and the accompanying drawings is to be regarded as a non-limiting example thereof and that the scope of protection is defined by the appended patent claims.

**Claims**

1. A gas analyzing system (10) for the analysis of respiratory gases supplied to and received from a mammal, said gas analyzing system comprising
   a light transmitter (11) which includes an IR-emitter adapted to emit at least one measuring beam (12), said light transmitter being arranged to emit said measuring beam (12) into a gas mixture including said respiratory gases,
   a filter component (14) including a number of filters (14a, 14b) having different transmission wavelength ranges, said filter (14) component being arranged to position said filters (14a, 14b) such that said at least one measuring beam (12) passes through said number of filters (14a, 14b) one at a time,
   a light receiver including an IR-detector (16) adapted to receive said measuring beam (12) and to generate at least one measurement signal representative of an optical energy of said measuring beam (12), and
   a signal processing circuitry (20) adapted to receive said at least one measurement signal, wherein said system is **characterized in that**
   said signal processing circuitry (20) includes:

   a peak detector (22) adapted to identify peaks in said at least one measurement signal, each peak corresponding to a filter of said filter component, and
   an intensity measure estimating unit (24) adapted to determine an intensity measure of each identified peak using at least one predetermined estimation function.

2. The gas analyzing system according to claim 1, wherein said peak detector (22) further comprises a time alignment circuit (28) adapted to perform a time alignment between identified peaks and said at least one predetermined estimation function.

3. The gas analyzing system according to claim 1 or 2, wherein said peak detector (22) is adapted to determine at least one peak characterizing measure of the measurement signal and to use said at least one peak characterizing measure to identify said peaks.

4. The gas analyzing system according to claim 2 or 3 when dependent on claim 2, wherein said time alignement circuit (28) comprises
a delay buffer (30) adapted to receive said measurement signal and to delay said signal a predetermined period;
a combiner (32) adapted to combine said delayed signal with the measurement signal to create a difference signal;
a zero crossing identifier (36) adapted to identify zero crossing in said difference signal and to deliver a peak detection indication based on the identified zero crossing.

5. The gas analyzing system according to any one of preceding claims 1-4,
wherein said peak detector (22) further comprises
a qualify and small peak detection logic (38) adapted to qualify peaks using a predetermined threshold, wherein peaks having a magnitude being above said threshold are qualified as being a peak; and to detect small peaks using a predetermined inter-peak distance.

6. The gas analyzing system according to any one of preceding claims 1-5,
wherein the intensity measure estimating unit (24) includes:

   a delay buffer (40) adapted to receive said measurement signal, to delay said signal a predetermined period, to receive the peak detection indication from said peak detector, and to create a time aligned peak using said delayed measurement signal and said peak detection indication;
   a model function circuit (44) adapted to receive the peak detection indication from said peak detector (22) and to select said at least one predetermined estimation function describing at least a part of said measurement signal on basis of said peak detection indication; and
   an intensity estimator (42) adapted to receive said predetermined estimation function and said time aligned peak and to estimate an intensity of each peak using said predetermined estimation function and said time aligned peak.

7. The gas analyzing system according to any one of preceding claims 1-5, wherein the intensity measure estimating unit (24) comprises:

   an inverse filter adapted to inverse filtering said measurement signal; and
   an intensity estimator (42) adapted to:

   estimate a base line using interpolation between reference levels in said filtered signal;
   subtract said estimated base line from said filtered signal to create a base line corrected signal; and
   calculate the intensity for each peak using values of said base line corrected signal.

8. The gas analyzing system according to any one of preceding claims 1-5, wherein the intensity measure estimating unit (24) comprises:

   an intensity estimator (42) adapted to:

   calculate the intensity for each peak using values of said measurement signal;
   de-convolute the signal containing the calculated intensities;
   estimate a base line using interpolation between reference levels in said de-convoluted signal; and
   subtract the estimation of the baseline the de-convoluted signal.

9. The gas analyzing system according to claim 6, wherein said intensity estimator (42) is adapted to estimate said intensity for each peak by solving

$$\min_{k,b} \left\| peak[\ ] - k \cdot wav[\ ] - b \right\|^2 ,$$

wherein peak [] represents said time aligned peak, k represents the estimated intensity, wav[] represents the predetermined estimation function, and b is an offset.

10. The gas analyzing system according to any one of preceding claims 1-9, further comprising an analyzer adapted to analyze said intensity measures to identify at least one gas of said gas mixture and/or a concentration of at least one gas of said gas mixture.

11. The gas analyzing system according to claim 10, wherein said analyzer is adapted to
use an equation system describing the relation between the partial pressure of gases in the measurement chamber and measured absorbances, and
use weight factors for respective equations in said system being a function of at least the measured absorbances.

12. Method for analyzing respiratory gases supplied to and received from a mammal, said method comprising the steps of:

emitting (S100) at least one measuring beam into a gas mixture including said respiratory gases,
positioning (S101) a filter component including a number of filters having different transmission wavelength ranges such that said at least one measuring beam passes through said number of filters one at a time,
receiving (S102) said measuring beam after passing through said gas mixture and filters,
generating (S103) at least one measurement signal representative of an optical energy of said measuring beam,

said method being **characterized by** the steps of:

identifying peaks (S104) in said at least one measurement signal, each peak corresponding to a filter of said filter component, and
determining an intensity measure of each identified peak using at least one predetermined estimation function (S105).

13. The method according to claim 12, wherein said step of identifying (S105) comprises the step of performing a time alignment between identified peaks and said at least one predetermined estimation function.

14. The method according to claim 12 or 13, wherein said step of identifying (S105) comprises the step of determining at least one peak characterizing measure of the measurement signal and to use said at least one peak characterizing measure to identify said peaks.

15. The method according to claim 13 or 14 when dependent on claim 13, wherein the step of performing a time alignment comprises the steps of:

delaying said measurement signal a predetermined period;
combining said delayed signal with the measurement signal to create a difference signal;
identifying zero crossing in said difference signal and to deliver a peak detection indication based on the identified zero crossing.

16. The method according to any one of preceding claims 12-15, wherein the step of identifying peaks (S104) further comprises the step of:

qualifying peaks using a threshold, wherein peaks having a magnitude being above said threshold are qualified as being a peak; and
detecting small peaks using a predetermined inter-peak distance.

17. The method according to any one of preceding claims 12-16, wherein the step of determining an intensity measure of each identified peak (S105) comprises the steps of:

delaying said measurement signal a predetermined period;
creating a time aligned peak using said delayed measurement signal and said peak detection indication;
selecting said at least one predetermined estimation function describing at least a part of said measurement signal on basis of said peak detection indication; and
estimating an intensity of each peak using said predetermined estimation function and said time aligned peak.

18. The method according to any one of preceding claims 12-16, wherein the step of determining an intensity measure of each identified peak (S105) comprises the steps of:

inverse filtering said measurement signal;

estimating a base line using interpolation between reference levels in said filtered signal;
subtracting said estimated base line from said filtered signal to create a base line corrected signal; and
calculating the intensity for each peak using values of said base line corrected signal.

19. The method according to any one of preceding claims 12-16, wherein the step of determining an intensity measure of each identified peak (S105) comprises the steps of:

calculating the intensity for each peak using values of said measurement signal;
de-convoluting the signal containing the calculated intensities;
estimating a base line using interpolation between reference levels in said de-convoluted signal; and
subtracting the estimation of the baseline the de-convoluted signal.

20. The method according to claim 17, wherein the step of estimating (S100) comprises the step of estimating said intensity for each peak by solving

$$\min_{k,b} \left\| peak[\ ] - k \cdot wav[\ ] - b \right\|^2 ,$$

wherein peak [] represents said time aligned peak, k represents the estimated intensity, wav[] represents the predetermined estimation function, and b is an offset.

21. The method according to any one of preceding claims 12-20, further comprising the step of analyzing said intensity measures to identify at least one gas of said gas mixture and/or a concentration of at least one gas of said gas mixture.

22. The method according to claim 21, further comprising the steps of using an equation system describing the relation between the partial pressure of gases in the measurement chamber and measured absorbances, and using weight factors for respective equations in said system being a function of at least the measured absorbances.

**Patentansprüche**

1. Gasanalysesystem (10) zur Analyse von einem Säuger zugeführten und von diesem aufgenommenen Atemgasen, wobei das Gasanalysesystem aufweist
einen Lichtsender (11), der einen IR-Emitter umfasst, der dazu geeignet ist, mindestens einen Messstrahl (12) auszustrahlen, wobei der Lichtsender so angeordnet ist, dass er den Messstrahl (12) in ein Gasgemisch ausstrahlt, das die Atemgase umfasst,
eine Filterkomponente (14), die eine Anzahl von Filtern (14a, 14b) mit verschiedenen Durchlasswellenlängenbereichen umfasst, wobei die Filterkomponente (14) so angeordnet ist, dass sie die Filter (14a, 14b) so positioniert, dass der mindestens eine Messstrahl (12) einzeln durch die Anzahl von Filtern (14a, 14b) hindurchgeht,
einen Lichtempfänger, der einen IR-Detektor (16) umfasst, der dazu geeignet ist, den Messstrahl (12) zu empfangen und mindestens ein Messsignal zu erzeugen, das für eine optische Energie des Messstrahls (12) repräsentativ ist, und
eine Signalverarbeitungsschaltung (20), die dazu geeignet ist, das mindestens eine Messsignal zu empfangen, wobei das System **dadurch gekennzeichnet ist, dass**
die Signalverarbeitungsschaltung (20) umfasst:

einen Scheitelwertdetektor (22), der dazu geeignet ist, Scheitelwerte in dem mindestens einen Messsignal zu erkennen, wobei jeder Scheitelwert einem Filter der Filterkomponente entspricht, und
eine Intensitätsmaß-Schätzeinheit (24), die dazu geeignet ist, ein Intensitätsmaß jedes erkannten Scheitelwertes unter Verwendung mindestens einer vorbestimmten Schätzfunktion zu bestimmen.

2. Gasanalysesystem nach Anspruch 1, wobei der Scheitelwertdetektor (22) ferner eine Zeitabgleich-Schaltung (28) aufweist, die dazu geeignet ist, einen Zeitabgleich zwischen erkannten Scheitelwerten und der mindestens einen vorbestimmten Schätzfunktion durchzuführen.

**3.** Gasanalysesystem nach Anspruch 1 oder 2, wobei der Scheitelwertdetektor (22) dazu geeignet ist, mindestens ein den Scheitelwert kennzeichnendes Maß des Messsignals zu bestimmen und das mindestens eine den Scheitelwert kennzeichnende Maß zur Erkennung der Scheitelwerte zu verwenden.

**4.** Gasanalysesystem nach Anspruch 2 oder 3, wenn dieser von Anspruch 2 abhängt, wobei die Zeitabgleich-Schaltung (28) aufweist:

einen Verzögerungspuffer (30), der dazu geeignet ist, das Messsignal zu empfangen und das Signal um einen vorbestimmten Zeitraum zu verzögern;
einen Kombinator (32), der dazu geeignet ist, das verzögerte Signal mit dem Messsignal zu kombinieren, um ein Differenzsignal zu schaffen;
einen Nulldurchgang-Identifikator (36), der dazu geeignet ist, einen Nulldurchgang in dem Differenzsignal zu erkennen und auf Grundlage des erkannten Nulldurchgangs eine Scheitelwert-Erkennungsanzeige zu liefern.

**5.** Gasanalysesystem nach einem der Ansprüche 1-4, wobei der Scheitelwertdetektor (22) ferner aufweist:

eine Unterscheidungs- und kleine Scheitelwerte erkennende Logik (38), die dazu geeignet ist, unter Verwendung einer vorbestimmten Schwelle Scheitelwerte zu unterscheiden, wobei Scheitelwerte mit einer Größe oberhalb der Schwelle als Scheitelwert **gekennzeichnet** werden; und unter Verwendung eines vorbestimmten Abstands zwischen den Scheitelwerten kleine Scheitelwerte zu erkennen.

**6.** Gasanalysesystem nach einem der vorhergehenden Ansprüche 1-5, wobei die Intensitätsmaß-Schätzeinheit (24) umfasst:

einen Verzögerungspuffer (40), der dazu geeignet ist, das Messsignal zu empfangen, das Signal um einen vorbestimmten Zeitraum zu verzögern, die Scheitelwert-Erkennungsanzeige von dem Scheitelwertdetektor zu empfangen und unter Verwendung des verzögerten Messsignals und der Scheitelwert-Erkennungsanzeige einen laufzeitkorrigierten Scheitelwert zu schaffen;
eine Modellfunktionsschaltung (44), die dazu geeignet ist, die Scheitelwert-Erkennungsanzeige von dem Scheitelwertdetektor (22) zu empfangen und die mindestens eine vorbestimmte Schätzfunktion auszuwählen, die zumindest einen Teil des Messsignals auf Grundlage der Scheitelwert-Erkennungsanzeige beschreibt; und
einen Intensitätsschätzer (42), der dazu geeignet ist, die vorbestimmte Schätzfunktion und den laufzeitkorrigierten Scheitelwert zu empfangen und unter Verwendung der vorbestimmten Schätzfunktion und des laufzeitkorrigierten Scheitelwerts eine Intensität jedes Scheitelwerts zu schätzen.

**7.** Gasanalysesystem nach einem der vorhergehenden Ansprüche 1-5, wobei die Intensitätsmaß-Schätzeinheit (24) umfasst:

ein inverses Filter, das dazu geeignet ist, das Messsignal invers zu filtern; und
einen Intensitätsschätzer (42), der dazu geeignet ist:

unter Anwendung von Interpolation zwischen Referenzpegeln in dem gefilterten Signal eine Basislinie zu schätzen;
die geschätzte Basislinie von dem gefilterten Signal zu subtrahieren, um ein basislinienkorrigiertes Signal zu schaffen; und
unter Verwendung von Werten des basislinienkorrigierten Signals die Intensität für jeden Scheitelwert zu berechnen.

**8.** Gasanalysesystem nach einem der vorhergehenden Ansprüche 1-5, wobei die Intensitätsmaß-Schätzeinheit (24) aufweist:

einen Intensitätsschätzer (42), der dazu geeignet ist:

unter Verwendung von Werten des Messsignals die Intensität für jeden Scheitelwert zu berechnen;
das die berechneten Intensitäten enthaltende Signal zu entfalten;
unter Anwendung von Interpolation zwischen Referenzpegeln in dem entfalteten Signal eine Basislinie zu schätzen; und
die Schätzung der Basislinie vom entfalteten Signal zu subtrahieren.

9. Gasanalysesystem nach Anspruch 6, wobei der Intensitätsschätzer (42) dazu geeignet ist, die Intensität für jeden Scheitelwert zu schätzen durch Auflösen von

$$\min_{k,b} \left\| peak[\ ] - k \cdot wav[\ ] - b \right\|^2 ,$$

wobei peak [] den laufzeitkorrigierten Scheitelwert darstellt, k die geschätzte Intensität darstellt, wav[] die vorbestimmte Schätzfunktion darstellt und b ein Offset ist.

10. Gasanalysesystem nach einem der vorhergehenden Ansprüche 1-9, ferner aufweisend einen Analysator, der dazu geeignet ist, die Intensitätsmaße zu analysieren, um mindestens ein Gas des Gasgemischs und/oder eine Konzentration von mindestens einem Gas des Gasgemischs zu erkennen.

11. Gasanalysesystem nach Anspruch 10, wobei der Analysator dazu geeignet ist,
ein Gleichungssystem zu verwenden, das das Verhältnis zwischen dem Teildruck von Gasen in der Messkammer und der gemessenen Extinktionen beschreibt, und
Gewichtsfaktoren für jeweilige Gleichungen in dem System zu verwenden, die eine Funktion zumindest der gemessenen Extinktionen sind.

12. Verfahren zur Analyse von Atemgasen, die einem Säuger zugeführt und von diesem empfangen werden, wobei das Verfahren die folgenden Schritte aufweist:

Ausstrahlen (S100) zumindest eines Messstrahls in ein Gasgemisch, das die Atemgase enthält,
Positionieren (S101) einer Filterkomponente, die eine Anzahl von Filtern mit verschiedenen Durchlasswellenlängenbereichen umfasst, so dass der mindestens eine Messstrahl nacheinander durch die Anzahl von Filtern hindurchgeht,
Empfangen (S102) des Messstrahls, nachdem dieser durch das Gasgemisch und die Filter hindurch gegangen ist,
Erzeugen (S103) mindestens eines Messsignals, das für eine optische Energie des Messstrahls repräsentativ ist, wobei das Verfahren durch die folgenden Schritte **gekennzeichnet** ist:

Erkennen von Scheitelwerten (S104) in dem mindestens einen Messsignal, wobei jeder Scheitelwert einem Filter der Filterkomponente entspricht, und
Bestimmen eines Intensitätsmaßes jedes erkannten Scheitelwerts unter Verwendung mindestens einer vorbestimmten Schätzfunktion (S105).

13. Verfahren nach Anspruch 12, wobei der Schritt des Erkennens (S105) den Schritt des Durchführens eines Zeitabgleichs zwischen erkannten Scheitelwerten und der mindestens einen vorbestimmten Schätzfunktion aufweist.

14. Verfahren nach Anspruch 12 oder 13, wobei der Schritt des Erkennens (S105) den Schritt des Bestimmens mindestens eines den Scheitelwert kennzeichnenden Maßes des Messsignals umfasst sowie die Verwendung des mindestens einen den Scheitelwert kennzeichnenden Maßes zur Erkennung der Scheitelwerte.

15. Verfahren nach Anspruch 13 oder 14, wenn dieser von Anspruch 13 abhängt, wobei der Schritt des Durchführens eines Zeitabgleichs die folgenden Schritte aufweist:

Verzögern des Messsignals um einen vorbestimmten Zeitraum;
Kombinieren des verzögerten Signals mit dem Messsignal, um ein Differenzsignal zu schaffen;
Erkennen eines Nulldurchgangs in dem Differenzsignal und Liefern einer Scheitelwert-Erkennungsanzeige auf Grundlage des erkannten Nulldurchgangs.

16. Verfahren nach einem der vorhergehenden Ansprüche 12-15, wobei der Schritt des Erkennens von Scheitelwerten (S104) ferner den folgenden Schritt aufweist:

Unterscheiden von Scheitelwerten unter Verwendung einer Schwelle, wobei Scheitelwerte mit einer Größe oberhalb der Schwelle als Scheitelwert **gekennzeichnet** werden; und

Erkennen von kleinen Scheitelwerten unter Verwendung eines vorbestimmten Abstands zwischen den Scheitelwerten.

17. Verfahren nach einem der vorhergehenden Ansprüche 12-16, wobei der Schritt des Bestimmens eines Intensitätsmaßes jedes erkannten Scheitelwerts (S105) die folgenden Schritte aufweist:

Verzögern des Messsignals um einen vorbestimmten Zeitraum;
Schaffen eines laufzeitkorrigierten Scheitelwerts unter Verwendung des verzögerten Messsignals und der Scheitelwert-Erkennungsanzeige;
Auswählen der mindestens einen vorbestimmten Schätzfunktion, die zumindest einen Teil des Messsignals auf Grundlage der Scheitelwert-Erkennungsanzeige beschreibt; und
Schätzen einer Intensität jedes Scheitelwerts unter Verwendung der vorbestimmten Schätzfunktion und des laufzeitkorrigierten Scheitelwerts.

18. Verfahren nach einem der vorhergehenden Ansprüche 12-16, wobei der Schritt des Bestimmens eines Intensitätsmaßes jedes erkannten Scheitelwerts (S105) die folgenden Schritte aufweist:

inverses Filtern des Messsignals;
Schätzen einer Basislinie unter Anwendung von Interpolation zwischen Referenzpegeln in dem gefilterten Signal;
Subtrahieren der geschätzten Basislinie von dem gefilterten Signal, um ein basislinienkorrigiertes Signal zu schaffen; und
Berechnen der Intensität für jeden Scheitelwert unter Verwendung von Werten des basislinienkorrigierten Signals.

19. Verfahren nach einem der vorhergehenden Ansprüche 12-16, wobei der Schritt des Bestimmens eines Intensitätsmaßes jedes erkannten Scheitelwerts (S105) die folgenden Schritte aufweist:

Berechnen der Intensität für jeden Scheitelwert unter Verwendung des Messsignals;
Entfalten des die berechneten Intensitäten enthaltenden Signals;
Schätzen einer Basislinie unter Anwendung von Interpolation zwischen Referenzpegeln in dem entfalteten Signal; und
Subtrahieren der Schätzung der Basislinie vom entfalteten Signal.

20. Verfahren nach Anspruch 17, wobei der Schritt des Schätzens (S100) den Schritt des Schätzens der Intensität für jeden Scheitelwert umfasst durch Auflösen von

$$\min_{k,b} \left\| peak[\ ] - k \cdot wav[\ ] - b \right\|^2 ,$$

wobei peak [] den laufzeitkorrigierten Scheitelwert darstellt, k die geschätzte Intensität darstellt, wav[] die vorbestimmte Schätzfunktion darstellt, und b ein Offset ist.

21. Verfahren nach einem der vorhergehenden Ansprüche 12-20, ferner aufweisend den Schritt des Analysierens der Intensitätsmaße, um mindestens ein Gas des Gasgemischs und/oder eine Konzentration von mindestens einem Gas des Gasgemischs zu erkennen.

22. Verfahren nach Anspruch 21, des Weiteren aufweisend die folgenden Schritte:

Verwenden eines Gleichungssystems, das das Verhältnis zwischen dem Teildruck von Gasen in der Messkammer und gemessenen Extinktionen beschreibt, und
Verwenden von Gewichtsfaktoren für jeweilige Gleichungen in dem System, die eine Funktion zumindest der gemessenen Extinktionen sind.

**Revendications**

1.  Système d'analyse de gaz (10) pour l'analyse de gaz respiratoires délivrés à un et reçus d'un mammifère, ledit système d'analyse de gaz comprenant

    un émetteur de lumière (11) qui inclut un émetteur d'IR adapté à émettre au moins un faisceau de mesure (12), ledit émetteur de lumière étant agencé de manière à émettre ledit faisceau de mesure (12) dans un mélange de gaz incluant lesdits gaz respiratoires,

    un composant de filtres (14) incluant un certain nombre de filtres (14a, 14b) ayant différentes plages de longueurs d'onde de transmission, ledit composant de filtres (14) étant agencé de façon à positionner lesdits filtres (14a, 14b) de telle manière que ledit au moins un faisceau de mesure (12) passe à travers ledit certain nombre de filtres (14a, 14b) un à la fois,

    un récepteur de lumière incluant un détecteur d'IR (16) adapté à recevoir ledit faisceau de mesure (12) et à générer au moins un signal de mesure représentatif d'une énergie optique dudit faisceau de mesure (12), et

    un circuit de traitement de signaux (20) adapté à recevoir ledit au moins un signal de mesure, dans lequel ledit système est **caractérisé en ce que**

    ledit circuit de traitement de signaux (20) inclut :

    un détecteur de pics (22) adapté à identifier des pics dans ledit au moins un signal de mesure, chaque pic correspondant à un filtre dudit composant de filtres, et

    une unité d'estimation de mesure d'intensité (24) adaptée à déterminer une mesure d'intensité de chaque pic identifié en utilisant au moins une fonction d'estimation prédéterminée.

2.  Système d'analyse de gaz selon la revendication 1, dans lequel ledit détecteur de pics (22) comprend en outre un circuit d'alignement temporel (28) adapté à effectuer un alignement temporel entre des pics identifiés et ladite au moins une fonction d'estimation prédéterminée.

3.  Système d'analyse de gaz selon la revendication 1 ou 2, dans lequel ledit détecteur de pics (22) est adapté à déterminer au moins une mesure de caractérisation de pic du signal de mesure et à utiliser ladite au moins une mesure de caractérisation de pic pour identifier lesdits pics.

4.  Système d'analyse de gaz selon la revendication 2 ou 3 lorsqu'elle dépend de la revendication 2, dans lequel ledit circuit d'alignement temporel (28) comprend

    un tampon de retard (30) adapté à recevoir ledit signal de mesure et à retarder ledit signal d'une période prédéterminée ;

    un combineur (32) adapté à combiner ledit signal retardé avec le signal de mesure pour créer un signal de différence ;

    un identifiant de passage par le zéro (36) adapté à identifier un passage par le zéro dans ledit signal de différence et à délivrer une indication de détection de pic sur la base du passage par le zéro identifié.

5.  Système d'analyse de gaz selon l'une quelconque des revendications précédentes 1 à 4, dans lequel ledit détecteur de pics (22) comprend en outre

    une logique de qualification et de détection de petits pics (38) adaptée à qualifier des pics en utilisant un seuil prédéterminé, dans lequel des pics ayant une grandeur étant au-dessus dudit seuil sont qualifiés comme étant un pic ; et à détecter des petits pics en utilisant une distance inter-pics prédéterminée.

6.  Système d'analyse de gaz selon l'une quelconque des revendications précédentes 1 à 5, dans lequel ladite unité d'estimation de mesure d'intensité (24) inclut :

    un tampon de retard (40) adapté à recevoir ledit signal de mesure, à retarder ledit signal d'une période prédéterminée, à recevoir l'indication de détection de pic dudit détecteur de pics, et à créer un pic temporellement aligné en utilisant ledit signal de mesure retardé et ladite indication de détection de pic ;

    un circuit de fonction de modèle (44) adapté à recevoir l'indication de détection de pic dudit détecteur de pics (22) et à sélectionner ladite au moins une fonction d'estimation prédéterminée décrivant au moins une partie dudit signal de mesure sur la base de ladite indication de détection de pic ; et

    un estimateur d'intensité (42) adapté à recevoir ladite fonction d'estimation prédéterminée et ledit pic temporellement aligné et à estimer une intensité de chaque pic en utilisant ladite fonction d'estimation prédéterminée et ledit pic temporellement aligné.

7.  Système d'analyse de gaz selon l'une quelconque des revendications précédentes 1 à 5, dans lequel ladite unité d'estimation de mesure d'intensité (24) comprend :

un filtre inverse adapté à inverser un filtrage dudit signal de mesure ; et
un estimateur d'intensité (42) adapté à :

estimer une ligne de base en utilisant une interpolation entre des niveaux de référence dans ledit signal filtré ;
soustraire ladite ligne de base estimée dudit signal filtré pour créer un signal corrigé en termes de ligne de base ; et
calculer l'intensité pour chaque pic en utilisant des valeurs dudit signal corrigé en termes de ligne de base.

8. Système d'analyse de gaz selon l'une quelconque des revendications précédentes 1 à 5, dans lequel ladite unité d'estimation de mesure d'intensité (24) comprend :

un estimateur d'intensité (42) adapté à :

calculer l'intensité pour chaque pic en utilisant des valeurs dudit signal de mesure :

dé-convoluer le signal contenant les intensités calculées ;
estimer une ligne de base en utilisant une interpolation entre des niveaux de référence dans ledit signal dé-convolué ; et
soustraire l'estimation de la ligne de base du signal dé-convolué.

9. Système d'analyse de gaz selon la revendication 6, dans lequel ledit estimateur d'intensité (42) est adapté à estimer ladite intensité pour chaque pic en résolvant

$$\min_{k,b}\left\|peak[\ ]-k\cdot wav[\ ]-b\ \right\|^2,$$

dans laquelle peak[] représente ledit pic temporellement aligné, k représente l'intensité estimée, wav[] représente la fonction d'estimation prédéterminée, et b est un décalage.

10. Système d'analyse de gaz selon l'une quelconque des revendications précédentes 1 à 9, comprenant en outre un analyseur adapté à analyser lesdites mesures d'intensité pour identifier au moins un gaz dudit mélange de gaz et/ou une concentration d'au moins un gaz dudit mélange de gaz.

11. Système d'analyse de gaz selon la revendication 10, dans lequel ledit analyseur est adapté à
utiliser un système d'équations décrivant la relation entre la pression partielle de gaz dans la chambre de mesure et les absorbances mesurées, et
utiliser des facteurs de pondération pour des équations respectives dans ledit système étant une fonction d'au moins les absorbances mesurées.

12. Procédé d'analyse de gaz respiratoires délivrés à un et reçus d'un mammifère, ledit procédé comprenant les étapes de :

émission (S100) d'au moins un faisceau de mesure dans un mélange de gaz incluant lesdits gaz respiratoires,
positionnement (S101) d'un composant de filtres incluant un certain nombre de filtres ayant différentes plages de longueurs d'onde de transmission de telle manière que ledit au moins un faisceau de mesure passe à travers ledit certain nombre de filtres un à la fois,
réception (S102) dudit faisceau de mesure après passage à travers ledit mélange de gaz et lesdits filtres,
génération (S103) d'au moins un signal de mesure représentatif d'une énergie optique dudit faisceau de mesure,

ledit procédé étant **caractérisé par** les étapes de :

identification de pics (S104) dans ledit au moins un signal de mesure, chaque pic correspondant à un filtre dudit composant de filtres, et

détermination d'une mesure d'intensité de chaque pic identifié en utilisant au moins une fonction d'estimation prédéterminée (S105).

**13.** Procédé selon la revendication 12, dans lequel ladite étape d'identification (S105) comprend l'étape d'exécution d'un alignement temporel entre des pics identifiés et ladite au moins une fonction d'estimation prédéterminée.

**14.** Procédé selon la revendication 12 ou 13, dans lequel ladite étape d'identification (S105) comprend l'étape de détermination d'au moins une mesure de caractérisation de pic du signal de mesure et d'utilisation de ladite au moins une mesure de caractérisation de pic pour identifier lesdits pics.

**15.** Procédé selon la revendication 13 ou 14 lorsqu'elle dépend de la revendication 13, dans lequel l'étape d'exécution d'un alignement temporel comprend les étapes de :

retardement dudit signal de mesure d'une période prédéterminée ;
combinaison dudit signal retardé avec le signal de mesure pour créer un signal de différence ;
identification d'un passage par le zéro dans ledit signal de différence et délivrance d'une indication de détection de pic sur la base du passage par le zéro identifié.

**16.** Procédé selon l'une quelconque des revendications précédentes 12 à 15, dans lequel l'étape d'identification de pics (S104) comprend en outre l'étape de :

qualification de pics en utilisant un seuil, dans lequel des pics ayant une grandeur étant au-dessus dudit seuil sont qualifiés comme étant un pic ; et
détection de petits pics en utilisant une distance inter-pics prédéterminée.

**17.** Procédé selon l'une quelconque des revendications précédentes 12 à 16, dans lequel l'étape de détermination d'une mesure d'intensité de chaque pic identifié (S105) comprend les étapes de :

retardement dudit signal de mesure d'une période prédéterminée ;
création d'un pic temporellement aligné en utilisant ledit signal de mesure retardé et ladite indication de détection de pic ;
sélection de ladite au moins une fonction d'estimation prédéterminée décrivant au moins une partie dudit signal de mesure sur la base de ladite indication de détection de pic ; et
estimation d'une intensité de chaque pic en utilisant ladite fonction d'estimation prédéterminée et ledit pic temporellement aligné.

**18.** Procédé selon l'une quelconque des revendications précédentes 12 à 16, dans lequel l'étape de détermination d'une mesure d'intensité de chaque pic identifié (S105) comprend les étapes de :

filtrage inverse dudit signal de mesure ;
estimation d'une ligne de base en utilisant une interpolation entre des niveaux de référence dans ledit signal filtré ;
soustraction de ladite ligne de base estimée dudit signal filtré pour créer un signal corrigé en termes de ligne de base ; et
calcul de l'intensité pour chaque pic en utilisant des valeurs dudit signal corrigé en termes de ligne de base.

**19.** Procédé selon l'une quelconque des revendications précédentes 12 à 16, dans lequel l'étape de détermination d'une mesure d'intensité de chaque pic identifié (S105) comprend les étapes de :

calcul de l'intensité pour chaque pic en utilisant des valeurs dudit signal mesuré ;
dé-convolution du signal contenant les intensités calculées ,
estimation d'une ligne de base en utilisant une interpolation entre des niveaux de référence dans ledit signal dé-convolué ; et
soustraction de l'estimation de la ligne de base du signal dé-convolué.

**20.** Procédé selon la revendication 17, dans lequel l'étape d'estimation (S100) comprend l'étape d'estimation de ladite intensité pour chaque pic en résolvant

$$\min_{k,b} \left\| peak[\ \ ] - k \cdot wav[\ \ ] - b \right\|^2,$$

dans laquelle peak[] représente ledit pic temporellement aligné, k représente l'intensité estimée, wav[] représente la fonction d'estimation prédéterminée, et b est un décalage.

21. Procédé selon l'une quelconque des revendications précédentes 12 à 20, comprenant en outre l'étape d'analyse desdites mesures d'intensité pour identifier au moins un gaz dudit mélange de gaz et/ou une concentration d'au moins un gaz dudit mélange de gaz.

22. Procédé selon la revendication 21, comprenant en outre les étapes de
utilisation d'un système d'équations décrivant la relation entre la pression partielle de gaz dans la chambre de mesure et les absorbances mesurées, et
utilisation de facteurs de pondération pour des équations respectives dans ledit système étant une fonction d'au moins les absorbances mesurées.

**Fig. 1**

EP 2 065 697 B1

**Fig. 2**

S100 | Emitting measuring beams

S101 | Positioning filter to obtain a varying optical signal

S102 | Receivning the optical signal at the detector

S103 | Generating a measurement signal reflecting the varying optical signal

S104 | Identifying peaks in the measurement signal

S105 | Determining an intensity measure of each identified peak

**Fig. 3**

**Fig. 4**

EP 2 065 697 B1

**Fig. 5**

IR(n) → Delay buffer (30) → (32) → LP-filter (34) → Zero crossing identifier (36) → Qualify and Small peak detection logic (38) → D(n)

Dist[]

22, 28

EP 2 065 697 B1

24

40

IR(n) → Delay buffer → peak[] → Intensity estimator → k

D(n)

bindex

44

Model function circuit

42

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4914719 A

- US 4692621 A